# EUROPEAN PATENT SPECIFICATION

(11) **EP 3 588 808 B1**
(45) Date of publication and mention of the grant of the patent: **23.02.2022**
(21) Application number: 18305793.4
(22) Date of filing: 21.06.2018
(51) Int. Cl.: H04B 10/272, H04J 14/02, H04Q 11/00

(54) **TWDM PON WITH VARIABLE SPLITTING RATIO**
TWDM-PON MIT VARIABLEM TEILUNGSVERHÄLTNIS
TWDM PON À RAPPORT DE DIVISION VARIABLE

(43) Date of publication of application: 01.01.2020
(73) Proprietor: Nokia Solutions and Networks Oy, 02610 Espoo (FI)
(72) Inventor: CHARLET, Gabriel, 91620 Nozay (FR); PFEIFFER, Thomas, 70435 Stuttgart (DE)
(74) Representative: Mudge, Kevin

(56) References cited:
- EP-A1- 1 981 196
- EP-A1- 2 637 333

## Description

### FIELD OF THE INVENTION

The present invention relates to optical network, in particular to the management of optical resources in an optical network.

### BACKGROUND OF THE INVENTION

Modern communication systems have been evolving to match the increasing demands in the delivery of digital content. Optical networks are instrumental in the distribution of data flows as they offer high capacity links.

Passive Optical Networks "PON" are used in point-to-multipoint architecture where servers combined with optical transmitters distribute optical signals carried over fibers that are connected to end-user through non powered optical splitters.

In a Wavelength Division Multiplexing "WDM" passive optical networks, wavelengths are allocated to end-users. Such resources allocation is simple but lacks of flexibility as wavelengths have to be reallocated when a change on end-users' sides occurs. In Time and Wavelength Division Multiplexed "TWDM" passive optical networks, optical resources are allocated to end-users on a time slot and wavelength basis, which offers increased flexibility. For example a target node requiring more bandwidth can be allocated more time slots to sustain the desired data rate.

The maximum capacity of TWDM PON is linked to the power budget. The non-powered optical splitter induces losses: a 1 by 16 splitter induces a loss of around 14dB, and a 1 by 64 splitter induces a loss of around 21 dB, to connect one Optical Line Terminal "OLT" in the carrier premise to the multiple Optical Network Units "ONUs" in end-users' premises. Considering the accumulated losses, a tradeoff has to be made between the power/link budget and the achievable data rate for a given and reasonable error rate. Said tradeoff also takes into consideration design margins, leading usually to a lower effective data rate.

The losses induced by the splitter are even more detrimental when higher capacity is required in given situation. For example in wireless backhauling, higher bandwidth may be sporadically required during busy hours or during a soccer game in case the PON is used to link a base station located in a stadium.

It is then required to design passive optical networks offering a more efficient resources allocation.

EP1981196A1 describes a method for providing a WDM-PON to save bandwidth resource and decrease requirements for processing capability of an OLT. EP2637333 describes a system in which only one distribution fibre is needed for connecting a remote node and a WDM demultiplexer located within a macro cell (within which multiple metro cells may be provided), which helps to reduce station costs for bringing the distribution fibre out into the field.

### SUMMARY OF THE INVENTION

The invention aims to remedy all or some of the disadvantages of the above identified prior art. It particularly proposes an optical device for managing optical resources.

A first aspect of the invention relates then to an optical device for managing optical resources from WDM optical signals in a PON network as claimed in claim 1.

Thus, thanks to these features, the first portion is processed by the first optical splitter and the second optical splitter, and the second portion is selectively provided to the optical coupler through the optical bypass, the processed first portion being then combined with the second portion. The optical device 1 allows then to prevent the second portion to suffer from losses induced by the first optical splitter and the second splitter. Since the second portion is not degraded by the cascaded first optical splitter and the second optical splitter, the optical device 1 advantageously allows to increase the data rate associated to the second portion.

A further aspect of the invention as claimed in claim 3 relates then to an optical device according to the first aspect of the invention.

According to various embodiments, the optical device comprises one or more of the features below, which should be considered in any possible technical combinations:
- said optical device wherein:
   o the wavelength demultiplexer is adapted to operate with bidirectional optical signals,
   o the multi-stage optical splitter is adapted to operate with bidirectional optical signals,
   o the coupler is adapted to operate with bidirectional optical signals,
   o the optical bypass is adapted to operate with bidirectional optical signals,
   the optical device being adapted to generate another optical signal from a plurality of input optical signals,
- the optical device further comprises an optical switch enabled to operate in a cross state or in a bar state and comprising:
   o a first port connected to the aggregated input,
   o a second port connected to the input from the wavelength demultiplexer,
   o a third port connected to the first output from the wavelength demultiplexer,
   o a fourth port connected to the input from the first optical splitter,
- the optical switch operating in the cross state is configured to connect the first port to the second port, and to connect the third port to the fourth port, and wherein the optical switch operating in the bar state is configured to connect the first port to the fourth port, and to connect the second port to the third port,
- the optical switch is remotely configurable,
- the optical device is adapted to operate with a Time and Wavelength Division Multiplexed optical signal.

### BRIEF DESCRIPTION OF THE FIGURES

Some embodiments of the present invention are now described, by way of example only, and with reference to the accompanying drawings, in which:
- FIG. 1 is a schematic block diagram of a passive optical network,
- FIG. 2 is a schematic block diagram of an optical device for managing optical resources from WDM optical signals in a passive optical network according to embodiments of the invention,
- FIG. 3 is a schematic block diagram of another optical device for managing optical resources from WDM optical signals in a passive optical network according to embodiments of the invention,
- FIG. 4a and FIG. 4b are schematic block diagrams of another optical device for managing optical resources from WDM optical signals in a passive optical network according to embodiments of the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their scope.

In the following description, well-known functions or constructions by the man skilled in the art are not described in detail since they would obscure the invention in unnecessary detail.

In the following description of the figures, some elements designated with arrows are depicting either optical signals carried on waveguides or electrical signals carried on wired connections. The orientations of the arrows symbolize the propagation direction of the optical and/or electrical signals. Such schematic representations are non-limiting and serve only for the understanding of the invention.

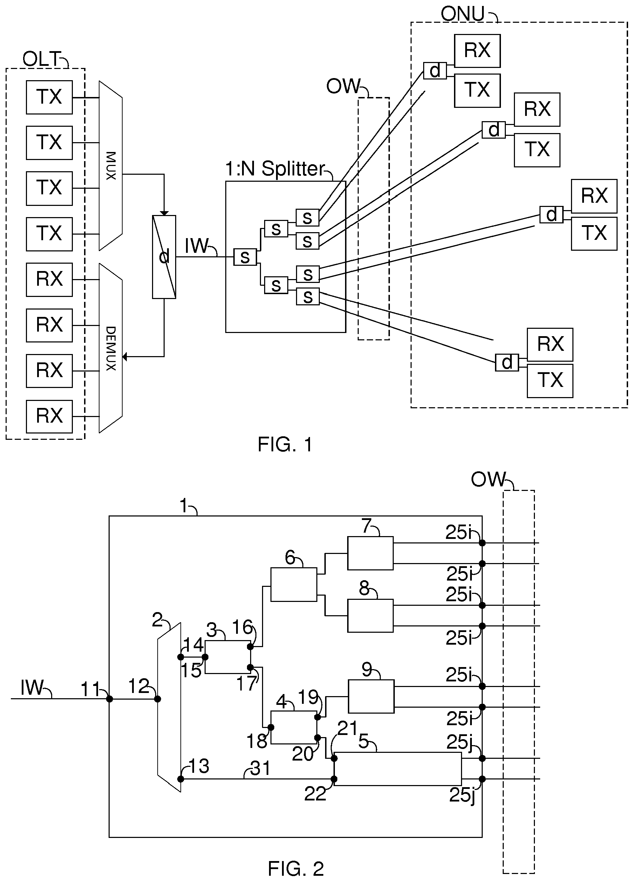

Referring to figure **FIG. 1****,** a schematic block diagram of a passive optical network is depicted.

A Passive Optical Network "PON" comprises a plurality of Optical Line Terminals OLT and a plurality of Optical Network Units ONU.

The OLT are transmitting data addressed to the ONU, and are receiving data transmitted by said ONU. In an example an OLT comprises a transmitter TX and a receiver RX. The transmitters TX of the plurality of OLT are transmitting each on different optical resources and are feeding a wavelength multiplexer MUX.

The multiplexed optical signal is provided to a diplexer d that splits the downstream link and the uptstream link on the optical waveguide IW that connects the plurality of OLT to the multi-stage splitter (denoted 1:N splitter on figure FIG. 1).

It is meant by 1:N splitter, a multi-stage splitter that splits an input optical signal into N output optical signals, each output optical signals representing a fraction of the power of the input optical signal. The 1:N Splitter comprises cascaded 1:2 splitter s, each inducing power losses on the divided optical signals.

The divided optical signals are outputted by the 1:N splitter and transit on optical waveguides OW connected to the plurality of ONU.

In an example the optical waveguides IW and/or OW are optical fibers, either monomodes or multimode.

Each ONU comprises a diplexer for separating the downstream link (from the OLT to the ONU) and the uptstream link (from the ONU to the OLT), an optical receiver for processing data sent by the OLT, and an optical transmitter for transmitting end-user's data to the plurality of OLT.

The OLT also comprises receivers RX linked to a wavelength demultiplexer DEMUX which demultiplexes an optical signal aggregated by the 1:N splitter, based on the transmitted optical signals by the plurality of ONU.

Referring to figure **FIG. 2****,** a schematic block diagram of an optical device for managing optical resources from WDM optical signals in a passive optical network according to embodiments of the invention is depicted.

In an embodiment the optical device 1 is adapted to manage the optical resources of a passive optical network. The optical device 1 replaces the 1:N Splitter from figure FIG. 1, and connects the optical waveguide IW with the optical waveguides OW.

In an embodiment, the optical device 1 comprises a wavelength demultiplexer 2, an optical coupler 5, an optical bypass 31, and a multi-stage splitter that comprises a first optical splitter 3, a second optical splitter 4, a plurality of optical splitters 6, 7, 8, 9.

The optical device 1 further comprises an aggregated input 11 for receiving an optical signal comprising a plurality of WDM optical signals, each WDM optical signal being generated by the transmitters TX from the OLT.

The wavelength demultiplexer 2 is adapted to demultiplex a received WDM optical signal, into a plurality of optical signals. For example, the wavelength demultiplexer 2 is configurable to select a wavelength to be outputted on a chosen output port 14. The wavelength demultiplexer 2 is also adapted to select a subset of wavelengths from the received optical signal and to output said selected subset to said chosen output port 14. The wavelength demultiplexer 2 is connected to the multi-stage optical splitter and is also connected to the optical bypass 31 through the output port 13. The wavelength demultiplexer 2 is adapted to demultiplex a first portion of a received WDM optical signals to be provided to the multi-stage optical splitter, and to demultiplex a second portion of said received WDM optical signal to be provide to the optical bypass 31.

The multi-stage optical splitter comprises a plurality of cascaded optical splitters. Referring to figure FIG.2, the multi-stage optical splitter comprises three stages, each comprising one or more optical splitters: the first stage comprises the first optical splitter 3, the second stage comprises the second optical splitter 4 and the optical splitter 6, and the third stage comprises the optical splitter 7, the optical splitter 8 and the optical splitter 9.

The first optical splitter 3 comprises the port 16 connected to the input port from the optical splitter 6. Said first optical splitter 3 also comprises the port 17 connected to the port 18 from the second optical splitter 4.

The second optical splitter 4 comprises the port 19 and the port 20. The port 19 connects the second optical splitter 4 with the optical splitter 9. The port 20 connects the second optical splitter 4 with the optical coupler 5.

In the embodiment of figure FIG. 2, the multi-stage optical splitter is limited to three stages in order to facilitate the understanding of the drawing, but in other embodiments the multi-stage optical splitter may comprise 2 stages or more than three stages, each stage comprising a sufficient number of optical splitters to achieve a cascaded scheme of optical splitters.

In the embodiment of figure FIG.2, the optical splitters 3, 4, 6 , 7, 8, 9 are 1:2 optical splitters. In yet another embodiment, a 1:N optical splitter is used in place of the first optical splitter 3, the second optical splitter 4, and the plurality of optical splitters 6, 7 8, 9, N being an integer greater or equal to 2. In such case, the 1:N optical splitter comprises an output port connected to the optical coupler, the output port being the equivalent to the port 20 of the second optical splitter 4. In an example the 1:N optical splitter is a 1:4 optical splitter. In yet another example, the 1:4 optical splitter is further connecter to others 1:N optical splitters in order to connects to a greater number of ports 25i.

The optical splitters from the multi-stage optical splitter are, for example, power splitters, that divide an input optical signal into two output optical signal, each outputted optical signal corresponding in terms of characteristics to the input optical signal, apart from the power. In case the optical splitter is a balanced power splitter with two outputs, the outputted optical signals are less than half the power of the input optical signal, taking into account the loss induced by the optical splitter.

The multi-stage optical splitter receives on an input port 15, the first portion of WDM optical signals, which has been outputted on the output port 14 by the demultiplexer 2. The first portion of WDM optical signals is then processed successively by the stages of the multi-stage optical splitter. The splitted first portion of WDM optical signals is outputted by the ports 25i from the multi-stage optical splitter. Said ports 25i are further linked to the optical waveguides OW.

The second optical splitter 4 comprises an output port 19 connected to the optical splitter 9. The processed first portion of WDM optical signals transits through the output port 19 up to the optical splitter 9. The optical splitter 4 further comprises an output port 20. Said output port 20 is connected to the input port 21 from the optical coupler 5.

The optical coupler 5 receives from the second optical splitter a partially processed first portion of WDM optical signals. The optical coupler 5 is linked to the demultiplexer 2 though the optical bypass 31 which feeds an input 22 from the optical coupler 5.

In an embodiment the optical coupler 5 is a 2x2 coupler which is enabled to combine two optical signals received at its input ports, and to divide the resulting combined signal into two equivalent optical signals to be outputted by its output ports.

The optical coupler 5 combines the partially processed first portion of WDM optical signals (which have been splitted successively by the first optical splitter 3 and the second optical splitter 4) with the second portion of WDM optical signals, and outputs a combined optical signal. Advantageously, when processed by the optical coupler 5, the second portion of WDM optical signals has not suffer loss from the cascaded optical splitters, therefore the second portion of WDM optical signals is more robust and convenient for higher order modulation format that are sensitive to attenuation.

The optical coupler 5 builds the combined optical signal which comprises the splitted first portion of WDM optical signals and the second portion of WDM optical signals.

The combined optical signal is further processed by the optical coupler 5. Said optical coupler 5 is also a signal divider and divides said combined optical signal, and outputs then the resulting divided combined optical signals on the output ports 25j. Advantageously, the output ports 25j convey each an optical signal which comprises a fraction of the first portion of WDM optical signals and the second portion of WDM optical signals which is almost unaltered. It is then possible to adjust specifically the parameters of the wavelengths comprised in the second portion of the WDM optical signals as said second portion does not suffer from the losses induced by the cascaded optical splitters from the multi-stage optical splitter. Advantageously the parameters of the signals from the second portion are tuned to achieve higher data rates than the signals from the first portion.

It is important to note that the ONU connected to the output port 25j receive the fraction of the first portion and the second portion which is almost unaltered.

In an example, the OLT uses 4 wavelengths in transmission and in reception. A first pair of wavelengths (the first portion of WDM optical signals) is sent into the multi-stage optical splitter and is to be shared by all the users, and a second pair of wavelengths (the second portion of WDM optical signals) is dropped by the wavelength demultiplexer 2.

Advantageously the optical coupler 5, for example a 2x2 coupler, is used to reinject the second pair of wavelengths and to avoid insertion loss increase.

The second pair of wavelengths dropped by the wavelength demultiplexer 2 is reinjected after bypassing 2 stages of 3dB coupler (the optical splitter 3 and the optical splitter 4) to reduce loss by 6dB, or probably ~7dB loss in practice and are connected to a quarter of the users, since the first portion of the WDM optical signals is processed by the multi-stage optical splitter comprising 3 stages (first optical splitter 3, optical splitter 6, and optical splitters 7 and 8). In another example wherein the multi-stage optical splitter comprises more than 3 stages, the second pair of wavelengths is connected to at least 2 users, but less than a quarter of the users.

Advantageously, thanks to the lower loss, the bit rate transported by the second pair of wavelengths can be increased. It can be increased typically by a factor 2 by moving from Non-Return-to-Zero "NRZ" (2 levels modulation) to Pulse Amplitude Modulation, such as "PAM4" (4 levels modulation), while keeping the same baud rate and thus a similar bandwidth requirements for the optical components, and also a similar chromatic dispersion tolerance.

Another alternative would be to use 20 or 25Gb/s Duobinary for the second pair of wavelengths. Duobinary will be useful to keep manageable the bandwidth and chromatic dispersion tolerance.

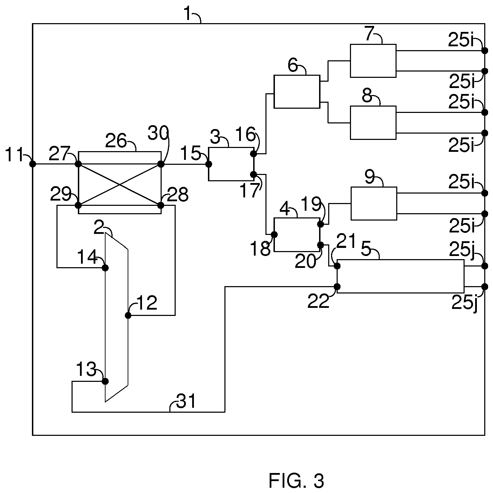

Referring to figure **FIG.3****,** a schematic block diagram of another optical device for managing optical resources from WDM optical signals in a passive optical network according to embodiments of the invention is depicted.

In an embodiment, the optical device 1 comprises the wavelength demultiplexer 2, the optical coupler 5, the optical bypass 31, and the multi-stage splitter that comprises the first optical splitter 3, the second optical splitter 4, the plurality of optical splitters 6, 7, 8, 9, which are organized in an arrangement similar to the arrangement of figure FIG. 2.

The demultiplexer 2 comprises the output 13 connected to the optical bypass 31 which feeds the optical coupler 5.

Another input from the optical coupler 5 is fed by the second optical splitter 4 from the multi-stage optical splitter, which also comprises the first optical splitter 3, and the optical splitters 6, 7, 8 and 9, arranged in stages.

In an embodiment, the optical device 1 further comprises an optical switch 26. An input 27 from said optical switch 26 is connected to the input 11 from the optical device 1. The input 27 receives the WDM optical signals.

The optical switch 26 also comprises an input 29 which is connected to the output port 14 from the wavelength demultiplexer 2.

The optical switch 26 further comprises an output 28 connected to the input port 12 from the wavelength demultiplexer 2.

The optical switch 26 also comprises an output 30 connected to the input port 15 from the first optical splitter 3.

The optical switch 26 is operable to operate in a bar state or in a cross state. In the bar state, the optical switch 26 lets the optical signal transit from the input 27 to the output 30. In the cross state, the optical switch 26 connects the input 27 to the output 28 and input 29 to output 30.

The optical switch 26 is configurable to output the received WDM optical signals either on the output port 30 (bar state) or on the output port 28 (cross state). When the optical switch 26 is configured to output optical signals on its output port 30, the received WDM optical signals is fully processed by the multi-stage optical splitter. The ports 25i and 25j are providing then to the optical waveguides OW, fractions of the WDM optical signals, each fraction being identical to the others. When the optical switch 26 is configured to output optical signals on its output port 28, the received WDM optical signals is provided to the wavelength demultiplexer 2. Said wavelength demultiplexer 2 outputs the second portion of the WDM optical signals to its output port 13 to be conveyed on the optical bypass 31. The wavelength demultiplexer 2 also outputs the first portion of the WDM optical signals on its output port 14 which is connected to the input port 29 from the optical switch 26. In such configuration of the optical switch 26, the input port 29 is connected to the output port 30. The first portion of WDM optical signals is then transiting from the input port 29 to the output port 30 which feds the first optical splitter 3.

In an example the optical switch 26 introduces an insertion loss of 0.75dB. In the cross configuration the wavelengths associated to the first portion of WDM optical signals are attenuated of 1.5dB since said wavelengths are crossing two times the optical switch 26.

Advantageously the optical switch 26 allows the optical device 1 to operate according to two configurations. In the first configuration, the optical switch 26 is configured so that the input port 27 is connected to the output port 30 so that all the wavelengths are provided to the multi-stage optical splitter. In the second configuration, the optical switch 26 is configured so that the input port 27 is connected to the output port 28 so that all the wavelengths are provided to the demultiplexer 2 which outputs the first portion of WDM optical signals to the first optical splitter 3 and the second portion of WDM optical signals to the combiner/coupler 5.

In an embodiment, the optical switch 26 is remotely configured by a controller. In an example said controller is a separate entity in the optical network dedicated to control and supervise the elements from said optical network. In another example said controller is an entity embedded into the optical device 1. The controller may be enabled to configure the optical switch 26 based on criteria such as traffic monitoring or bandwidth requirement signaled by the OLT.

In an embodiment, the optical device 1 is enabled to operate with the transmitters from the OLTs and the receivers from the ONUs that are reconfigurable between 10Gbs/s and 20Gb/s. This ability to be reconfigured is achieved with NRZ and PAM4 which share the same symbol rate than with 10Gb/s NRZ and 20-25Gb/s Duobinary. Advantageously, the optical device 1 allows the passive optical network to operate in a mode with all the users having similar configurations or resources allocations, or to operate in another mode where a fraction of the users have access to an increased bandwidth, said fraction of users corresponding to the receivers tuned to receive wavelengths from the second portion of WDM optical signals. In the example embodiment of figure FIG. 3, a quarter of the users have around four times higher bandwidth thanks to the reduced losses as the multi-stage optical splitter comprises 3 stages.

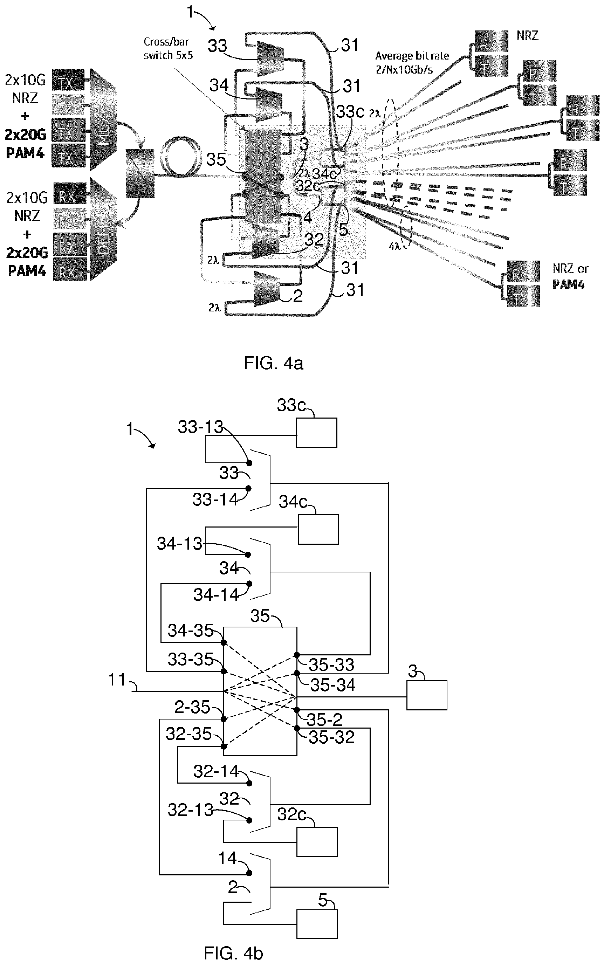

Referring to figures **FIG. 4a** and **FIG. 4b****,** schematic block diagrams of another optical device for managing optical resources from WDM optical signals in a passive optical network according to embodiments of the invention is depicted.

The optical device 1 is first depicted through figure FIG. 4a, and then is further detailed through FIG. 4b which depicts an optical switch 35.

In an embodiment, the optical device 1 comprises 1 the wavelength demultiplexer 2, the optical coupler 5, the optical bypass 31, and the multi-stage splitter that comprises the first optical splitter 3, the second optical splitter 4, the plurality of optical splitters 6, 7, 8, 9, which are organized in an arrangement similar to the arrangement of figure FIG. 2 or the arrangement of figure FIG. 3.

In an embodiment, the optical device 1 further comprises:
- the optical switch 35, fulfilling the same switching function as the optical switch 26,
- a wavelength demultiplexer 32 comprising an input port, an output port 32-13 and an output port 32-14,
- a wavelength demultiplexer 33 comprising an input port, an output port 33-13 and an output port 33-14,
- a wavelength demultiplexer 34 comprising an input port, an output port 34-13 and an output port 34-14.

The optical switch 35 comprises:
- an input port receiving the WDM optical signals from the OLT,
- an output port connected to the first optical splitter 3,
- an output port 35-2 connected to the input port of the demultiplexer 2,
- an input port 2-35 connected to the output port 14 of the demultiplexer 2
- an output port 35-32 connected to the input port of the demultiplexer 32,
- an input port 32-35 connected to the output port 32-14 of the demultiplexer 32,
- an output port 35-33 connected to the input port of the demultiplexer 33,
- an input port 33-35 connected to the output port 33-14 of the demultiplexer 33,
- an output port 35-34 connected to the input port of the demultiplexer 34
- an input port 34-35 connected to the output port 34-14 of the demultiplexer 32.

The optical device 1 further comprises:
- an optical combiner/coupler 32c combining the optical signal outputted by the output port 32-13 from the demultiplexer 32 and the optical signal at the input from the optical splitter 9,
- an optical combiner/coupler 33c combining the optical signal outputted by the output port 33-13 from the demultiplexer 32 and the optical signal at the input from the optical splitter 7,
- an optical combiner/coupler 34c combining the optical signal outputted by the output port 34-13 from the demultiplexer 32 and the optical signal at the input from the optical splitter 8.

In an embodiment the optical switch 35 is a 5x5 optical switching matrix or a 5x5 cross/bar switch. The optical switch 35 is enabled to be configured in various configuration allowing to connect one of the demultiplexer 2, 32, 33, 34 to a respective optical combiner/coupler 5, 32c, 33c, 34c, or to link directly the input port from said optical switch 35 to the input from the first optical splitter 3.

It should be noted that the embodiment of figures FIG. 4a and FIG. 4b depicts an architecture with 4 optical combiners/couplers 5, 32c, 33c and 34c. Other architectures may also be possible with 2 optical combiners/couplers, or 3 optical/combiners/couplers. Depending on the number of OLTs and used wavelength, the number of optical combiners/couplers such as the optical combiner/coupler 5, and their arrangement with the demultiplexers such as the demultiplexer 2, determines the number of ONUs that may benefit from the optical resources that are skipping lossy splitting stages.

In an example, the optical switch 35 is configured so that the demultiplexer 32 has its input port connected to the output port 35-32 from the optical switch 35. In such case the demultiplexer 32 receives the WDM optical signals. Said WDM optical signals is demultiplexed by the demultiplexer 32, and a corresponding first portion of the WDM optical signals is provided to the first optical splitter and a second portion of the WDM optical signals is provided to the optical combiner/coupler 32c. The second portion is then combined with the cascaded splitting of the first optical splitter 3 and the second optical splitter 4.

In another example, the optical switch 35 is configured so that the demultiplexer 33 has its input port connected to the output port 35-33 from the optical switch 35. In such case the demultiplexer 33 receives the WDM optical signals. Said WDM optical signals is demultiplexed by the demultiplexer 33, and a corresponding first portion of the WDM optical signals is provided to the first optical splitter and a second portion of the WDM optical signals is provided to the optical combiner/coupler 33c. The second portion is then combined with the cascaded splitting of the first optical splitter 3 and the optical splitter 6.

Advantageously, the optical switch 35 comprises a plurality of inputs and a plurality of outputs that are connected to the corresponding optical combiners/couplers associated with their respective optical splitters from the multi-stage optical splitter. Such optical device 1 comprising the optical switch 35 and the demultiplexer 2, 32, 33 and 34 offers the ability to selectively provide the second portion of the WDM optical signals to a corresponding optical splitter, located after the first optical splitter and, the second optical splitter 4 or the optical splitter 6, so that the second portion does not suffer from losses induced by the first stages of the multi-stage optical splitter. Thanks to the optical switch 35, it is then possible to select some ONUs to be reachable with the second portion, said ONUs benefiting then from an increased data rate whereas, simultaneously, the others ONUs are reachable with the first portion.

In an embodiment, the optical device 1 is a bidirectional optical element. The wavelength demultiplexer 2, the optical coupler 5, the optical bypass 31, and the multi-stage splitter that comprises the first optical splitter 3, the second optical splitter 4, the plurality of optical splitters 6, 7, 8, 9, are enabled to process optical signals propagating from the OLT side towards the ONU side, and are also enabled to process optical signals propagating from the ONU towards the OLT side. In particular the demultiplexer 2 is also enabled to multiplex optical signals, and the optical splitters are also adapted to couple optical signals.

In another embodiment, wherein the optical device 1 is a bidirectional optical element, the optical switch 35 is a bidirectional optical switch.

In yet another embodiment, wherein the optical device 1 is a bidirectional optical element, the optical switch 35 is a bidirectional optical switch, and the demultiplexer 2, 32, 33, 34 are also enabled to multiplex optical signals.

The optical device 1 is enabled to process an optical signal comprising a plurality of WDM optical signals, transmitted by the OLT. The optical device 1 is adapted to selectively disaggregate and process the plurality of WDM optical signals into the first portion and the second portion. The first portion is outputted on the ports 25i and the second portion combined with the first portion is outputted on the ports 25j. The optical device 1, being also a bidirectional optical element, is enabled to receive input WDM optical signals on the ports 25i and 25j. The WDM optical signals received on the ports 25i are further processed by the cascaded optical splitters/couplers 7, 8, 6, 3, and are provided to the demultiplexer/multiplexer 2. The WDM optical signals received on the ports 25j, are processed by the optical coupler 5. A portion of WDM optical signals is fed into the second optical splitter/coupler 4 and another portion of WDM optical signal is conveyed through the optical bypass 31 up to the demultiplexer/multiplexer 2. Said demultiplexer/multiplexer 2 multiplexes the output from the optical splitter/coupler 3 and the output from the optical bypass 31 in order to generate an aggregated WDM optical signal from the WDM optical signals received on the ports 25i and 25j. Advantageously, the WDM optical signals received on ports 25j and transiting through the optical bypass 31 are not processed by the cascaded optical splitters/couplers and are then less suffering from induced losses. The bidirectional optical device 1 allows then to use specific transmitting parameters by the users at the ONU side that are connected to the ports 25j. The data rates of these users may be higher as the reduced losses render possible the use of higher order modulation.

The optical device 1 is a reconfigurable node, in which the reconfiguration is accomplished by using the optical switch 35 for interconnecting passive elements such as splitters and wavelength (de)muxes in different configurations.

The optical switch 35 is configurable to establish relatively low loss path between the OLTs and selected ONUs. If the capacity requests by the ONUs increases, a fair sharing of the optical resources can be restored by configuring the optical switch 35 in bypass mode, wherein all optical signals are transiting through the multi-stage optical splitter for being distributed amongst the ONUs.

The functions of the various elements shown in the set of figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. An optical device for managing optical resources from Wavelength Division Multiplexing, WDM, optical signals in a Passive Optical Network, PON, the optical
device being adapted to process an optical signal into a plurality of output optical signals, the optical device comprising:
- a wavelength demultiplexer (2),
- a multi-stage optical splitter connected to the wavelength demultiplexer and comprising a first optical splitter (3) cascaded with a second optical splitter (4),
- a coupler (5) connected to the second optical splitter,
- an optical bypass (31) directly
connecting the wavelength demultiplexer (2) and
the coupler (5),
the wavelength demultiplexer (2) being configured:
- to select a first portion of the optical signal and,
- to select a second portion of said optical signal and,
- to provide said second portion to the coupler (5) through the optical bypass (31),
the coupler (5) being configured to combine said second portion with the first portion after being processed by the first optical splitter (3) and the second optical splitter (4) being configured to form a combined optical signal, the coupler (5) further being configured to
divide the said combined optical signal to form divided combined optical signals, and output the divided combined optical signals on output ports (25j) of the coupler, each divided combined optical signal comprising a fraction of the first portion of the optical signal, and the second portion of the optical signal.

2. An optical device (1) according to 1, wherein:
- the wavelength demultiplexer (2) is adapted to operate with bidirectional optical signals,
- the multi-stage optical splitter is adapted to operate with bidirectional optical signals,
- the coupler (5) is adapted to operate with bidirectional optical signals,
- the optical bypass (31) is adapted to operate with bidirectional optical signals, the optical device (1) being adapted to generate another optical signal from a plurality of input optical signals.

3. An optical device according to 1 or 2 further comprising:
- an aggregated input (11) for receiving the optical signal,
- a plurality of outputs for outputting the plurality of output optical signals, the plurality of outputs comprising a first subset of outputs (25i) and the output ports of the coupler,
- the wavelength demultiplexer (2) comprising:
o an input connected (12) to the aggregated input (11) and,
o a first output (14) and,
o a second output (13) connected to an optical bypass (31),
- the first optical splitter (3) comprising:
o an input (15) connected to the first output (14) from the demultiplexer (2) and,
o a first output (17) and,
o a second output (16) connecting said first optical splitter to the first subset of outputs (25i),
- the second optical splitter (4) comprising:
o an input (18) connected to the first output (17) from the first optical splitter (3),
o a first output (20), and,
o a second output (19) connecting said second optical splitter (4) to the first subset of outputs (25i),
- the coupler (5) comprising:
o a first input (22) connected to the optical bypass (31) and,
o a second input connected to the first output (20) of the second optical splitter (4).

4. An optical device according to claim 3, wherein said optical device further comprises an optical switch (26) enabled to operate in a cross state or in a bar state and comprising:
- a first port (27) connected to the aggregated input (11),
- a second port (28) connected to the input from the wavelength demultiplexer (2),
- a third port connected (29) to the first output (9) from the wavelength demultiplexer (2),
- a fourth port (30) connected to the input (15) from the first optical splitter (3).

5. An optical device according to claim 4, wherein the optical switch (26) operating in the cross state is configured to connect the first port (27) to the second port (28), and to connect the third port (29) to the fourth port (30), and wherein the optical switch (26) operating in the bar state is configured to connect the first port (27) to the fourth port (30), and to connect the second port (28) to the third port (29).

6. An optical device according to claim 4 or claim 5, wherein the optical switch (26) is remotely configurable.

7. An optical device according to any of the preceding claims, wherein said optical device is adapted to operate with a Time and Wavelength Division Multiplexed optical signal.

## Patentansprüche

1. Optische Vorrichtung zum Verwalten von optischen Ressourcen von optischen Wellenlängenmultiplex(WDM)-Signalen in einem passiven optischen Netzwerk, PON, wobei die optische Vorrichtung angepasst ist, ein optisches Signal zu einer Vielzahl von optischen Ausgangssignalen zu verarbeiten, wobei die optische Vorrichtung Folgendes umfasst:
- einen Wellenlängendemultiplexer (2),
- einen mehrstufigen optischen Splitter, der mit dem Wellenlängendemultiplexer verbunden ist und einen ersten optischen Splitter (3) umfasst, der mit einem zweiten optischen Splitter (4) kaskadiert ist,
- einen Koppler (5), der mit dem zweiten optischen Splitter verbunden ist,
- einen optischen Bypass (31), der den Wellenlängendemultiplexer (2) und den Koppler (5) direkt verbindet,
wobei der Wellenlängendemultiplexer (2) zu Folgendem ausgelegt ist:
- Auswählen eines ersten Abschnitts des optischen Signals und,
- Auswählen eines zweiten Abschnitts des optischen Signals und,
- Bereitstellen des zweiten Abschnitts über den optischen Bypass (31) für den Koppler (5),
wobei der Koppler (5) dazu ausgelegt ist, den zweiten Abschnitt mit dem ersten Abschnitt zu kombinieren, nachdem sie vom ersten optischen Splitter (3) verarbeitet wurden, und wobei der zweite optische Splitter (4) dazu ausgelegt ist, ein kombiniertes optisches Signal zu bilden, wobei der Koppler (5) ferner dazu ausgelegt ist, das kombinierte optische Signal zu teilen, um geteilte kombinierte optische Signale bereitzustellen und die geteilten kombinierten optischen Signale an Ausgangsports (25j) des Kopplers auszugeben, wobei jedes geteilte kombinierte optische Signal einen Anteil des ersten Abschnitts des optischen Signals und des zweiten Abschnitts des optischen Signals umfasst.

2. Optische Vorrichtung (1) nach Anspruch 1, wobei:
- der Wellenlängendemultiplexer (2) angepasst ist, mit bidirektionalen optischen Signalen betrieben zu werden,
- der mehrstufige optische Splitter angepasst ist, mit bidirektionalen optischen Signalen betrieben zu werden,
- der Koppler (5) angepasst ist, mit bidirektionalen optischen Signalen betrieben zu werden,
- der optische Bypass (31) angepasst ist, mit bidirektionalen optischen Signalen betrieben zu werden,
wobei die optische Vorrichtung (1) angepasst ist, ein weiteres optisches Signal aus einer Vielzahl von optischen Eingangssignalen zu erzeugen.

3. Optische Vorrichtung nach Anspruch 1 oder Anspruch 2, die ferner Folgendes umfasst:
- einen aggregierten Eingang (11) zum Empfangen des optischen Signals,
- eine Vielzahl von Ausgängen zum Ausgeben der Vielzahl von optischen Ausgangssignalen, wobei die Vielzahl von Ausgängen einen ersten Untersatz von Ausgängen (25i) und die Ausgangsports des Kopplers umfassen,
- wobei der Wellenlängendemultiplexer (2) Folgendes umfasst:
o einen Eingang (12), der mit dem aggregierten Eingang (11) verbunden ist und,
o einen ersten Ausgang (14) und,
o einen zweiten Ausgang (13), der mit einem optischen Bypass (31) verbunden ist,
- wobei der erste optische Splitter (3) Folgendes umfasst:
o einen Eingang (15), der mit dem ersten Ausgang (14) vom Demultiplexer (2) verbunden ist und,
o einen ersten Ausgang (17) und,
o einen zweiten Ausgang (16), der den ersten optischen Splitter mit dem ersten Untersatz von Ausgängen (25i) verbindet,
- wobei der zweite optische Splitter (4) Folgendes umfasst:
o einen Eingang (18), der mit dem ersten Ausgang (17) vom ersten optischen Splitter (3) verbunden ist,
o einen ersten Ausgang (20), und,
o einen zweiten Ausgang (19), der den zweiten optischen Splitter (4) mit dem ersten Untersatz von Ausgängen (25i) verbindet,
- wobei der Koppler (5) Folgendes umfasst:
o einen ersten Eingang (22), der mit dem optischen Bypass (31) verbunden ist und,
o einen zweiten Eingang, der mit dem ersten Ausgang (20) des zweiten optischen Splitters (4) verbunden ist.

4. Optische Vorrichtung nach Anspruch 3, wobei die optische Vorrichtung ferner einen optischen Schalter (26) umfasst, der in einem Kreuzzustand oder in einem Balkenzustand betrieben werden kann und Folgendes umfasst:
- einen ersten Port (27), der mit dem aggregierten Eingang (11) verbunden ist,
- einen zweiten Port (28), der mit dem Eingang vom Wellenlängendemultiplexer (2) verbunden ist,
- einen dritten Port (29), der mit dem ersten Ausgang (9) vom Wellenlängendemultiplexer (2) verbunden ist,
- einen vierten Port (30), der mit dem Eingang (15) vom ersten optischen Splitter (3) verbunden ist.

5. Optische Vorrichtung nach Anspruch 4, wobei der optische Schalter (26), der im Kreuzzustand betrieben wird, dazu ausgelegt ist, den ersten Port (27) mit dem zweiten Port (28) zu verbinden, und den dritten Port (29) mit dem vierten Port (30) zu verbinden, und wobei der optische Schalter (26), der im Balkenzustand betrieben wird, dazu ausgelegt ist, den ersten Port (27) mit dem vierten Port (30) zu verbinden, und den zweiten Port (28) mit dem dritten Port (29) zu verbinden.

6. Optische Vorrichtung nach Anspruch 4 oder Anspruch 5, wobei der optische Schalter (26) aus der Ferne auslegbar ist.

7. Optische Vorrichtung nach einem der vorhergehenden Ansprüche, wobei die optische Vorrichtung angepasst ist, mit einem optischen Zeit- und Wellenlängenmultiplexsignal betrieben zu werden.

## Revendications

1. Dispositif optique destiné à gérer des ressources optiques à partir de signaux optiques à multiplexage par répartition en longueur d'onde, WDM, sur un réseau optique passif, PON, dans lequel le dispositif optique est adapté pour traiter un signal optique en une pluralité de signaux optiques de sortie, dans lequel le dispositif optique comprend :
- un démultiplexeur de longueur d'onde (2),
- un séparateur optique à étages multiples relié au démultiplexeur de longueur d'onde et qui comprend un premier séparateur optique (3) en cascade avec un second séparateur optique (4),
- un coupleur (5) relié au second séparateur optique,
- une dérivation optique (31) qui relie directement le démultiplexeur de longueur d'onde (2) et le coupleur (5),
dans lequel le démultiplexeur de longueur d'onde (2) est configuré :
- pour sélectionner une première partie du signal optique et,
- pour sélectionner une seconde partie dudit signal optique et,
- pour fournir ladite seconde partie au coupleur (5) par le biais de la dérivation optique (31),
dans lequel le coupleur (5) est configuré pour combiner ladite seconde partie à la première partie après qu'elle a été traitée par le premier séparateur optique (3), et le second séparateur optique (4) est configuré pour former un signal optique combiné, dans lequel le coupleur (5) est en outre configuré pour diviser ledit signal optique combiné afin de former des signaux optiques combinés divisés, et pour délivrer les signaux optiques combinés divisés sur les ports de sortie (25j) du coupleur, dans lequel chaque signal optique combiné divisé comprend une fraction de la première partie du signal optique, et la seconde partie du signal optique.

2. Dispositif optique (1) selon la revendication 1, dans lequel :
- le démultiplexeur de longueur d'onde (2) est adapté pour fonctionner avec des signaux optiques bidirectionnels,
- le séparateur optique à étages multiples est adapté pour fonctionner avec des signaux optiques bidirectionnels,
- le coupleur (5) est adapté pour fonctionner avec des signaux optiques bidirectionnels,
- la dérivation optique (31) est adaptée pour fonctionner avec des signaux optiques bidirectionnels,
dans lequel le dispositif optique (1) est adapté pour générer un autre signal optique à partir d'une pluralité de signaux optiques d'entrée.

3. Dispositif optique selon la revendication 1 ou la revendication 2, qui comprend en outre :
- une entrée agrégée (11) destinée à recevoir le signal optique,
- une pluralité de sorties destinées à délivrer la pluralité de signaux optiques de sortie, dans lequel la pluralité de sorties comprend un premier sous-ensemble de sorties (25i) et les ports de sortie du coupleur,
- dans lequel le démultiplexeur de longueur d'onde (2) comprend :
o une entrée (12) reliée à l'entrée agrégée (11) et,
o une première sortie (14) et,
o une seconde sortie (13) reliée à une dérivation optique (31),
- dans lequel le premier séparateur optique (3) comprend :
o une entrée (15) reliée à la première sortie (14) qui provient du démultiplexeur (2) et,
o une première sortie (17) et,
o une seconde sortie (16) qui relie ledit premier séparateur optique au premier sous-ensemble de sorties (25i),
- dans lequel le second séparateur optique (4) comprend :
o une entrée (18) reliée à la première sortie (17) qui provient du premier séparateur optique (3),
o une première sortie (20), et,
o une seconde sortie (19) qui relie ledit second séparateur optique (4) au premier sous-ensemble de sorties (25i),
- dans lequel le coupleur (5) comprend :
o une première entrée (22) reliée à la dérivation optique (31), et
o une seconde entrée reliée à la première sortie (20) du second séparateur optique (4).

4. Dispositif optique selon la revendication 3, dans lequel ledit dispositif optique comprend en outre un commutateur optique (26) capable de fonctionner dans un état croisé ou dans un état de barre et qui comprend :
- un premier port (27) relié à l'entrée agrégée (11),
- un second port (28) relié à l'entrée qui provient du démultiplexeur de longueur d'onde (2),
- un troisième port (29) relié à la première sortie (9) qui provient du démultiplexeur de longueur d'onde (2),
- un quatrième port (30) relié à l'entrée (15) qui provient du premier séparateur optique (3).

5. Dispositif optique selon la revendication 4, dans lequel le commutateur optique (26) qui fonctionne dans l'état croisé est configuré pour relier le premier port (27) au second port (28), et pour relier le troisième port (29) au quatrième port (30), et dans lequel le commutateur optique (26) qui fonctionne dans l'état de barre est configuré pour relier le premier port (27) au quatrième port (30), et pour relier le second port (28) au troisième port (29).

6. Dispositif optique selon la revendication 4 ou 5, dans lequel le commutateur optique (26) est configurable à distance.

7. Dispositif optique selon l'une quelconque des revendications précédentes, dans lequel ledit dispositif optique est adapté pour fonctionner avec un signal optique à multiplexage par répartition en longueur d'onde et dans le temps.
